Europäisches Patentamt

**European Patent Office**

Office européen des brevets

(11) Numéro de publication: **0 007 857**
**B1**

(12) FASCICULE DE BREVET EUROPEEN

(45) Date de publication du fascicule du brevet:
14.07.82

(21) Numéro de dépôt: **79400502.5**

(22) Date de dépôt: **13.07.79**

(51) Int. Cl.³: **B 32 B 17/10, C 03 C 27/06**

(54) Vitrage chauffant et/ou d'alarme et feuille intercalaire utilisée lors de sa fabrication.

(30) Priorité: **13.07.78 FR 7820954**

(43) Date de publication de la demande:
**06.02.80 Bulletin 80/3**

(45) Mention de la délivrance du brevet:
**14.07.82 Bulletin 82/28**

(84) Etats contractants désignés:
**AT BE CH DE FR GB IT LU NL SE**

(56) Documents cités:
**DE-A-2 629 779**
**FR-A-1 533 535**
**FR-A-2 059 907**
**FR-A-2 233 179**
**GB-A-1 254 485**

(73) Titulaire: **SAINT-GOBAIN INDUSTRIES, 62, Bd Victor Hugo, F-92209 Neuilly sur Seine (FR)**

(72) Inventeur: **Rougier, Gilles, 90 Route d'Argent, F-45620 Cerdon du Loiret (FR)**

(74) Mandataire: **Eudes, Marcel et al, Saint-Gobain Recherche 39 Quai Lucien Lefranc, F-93304 Aubervilliers Cedex (FR)**

Vitrage chauffant et/ou d'alarme et feuille intercalaire utilisée lors de sa fabrication

La présente invention concerne un vitrage feuilleté comprenant des fils de résistance électrique noyés dans une couche intercalaire d'un matériau thermoplastique. L'invention concerne plus particulièrement une nouvelle structure de vitrage feuilleté, ainsi qu'une feuille de matières plastiques préfabriquée comprenant une couche thermoplastique dans laquelle est incrusté ou noyé un réseau d'un de plusieurs fils électriques, ladite feuille préfabriquée pouvant être utilisée dans la fabrication du vitrage feuilleté précité.

Des vitrages feuilletés comme désignés ci-dessus peuvent être utilisés par exemple comme vitrages d'alarme et, dans ce but, des résistances électriques en fils fins noyés dans une couche intercalaire d'un matériau thermoplastique sont connectées à un dispositif électrique d'alarme. Lorsque le vitrage est brisé, la résistance des fils est modifiée et le dispositif d'alarme est mis en action.

De tels vitrages feuilletés peuvent aussi être utilisés dans un autre domaine d'application, celui des vitrages chauffants. Dans ce cas, une source de courant électrique est raccordée aux fils de résistance noyés dans la couche intercalaire et le courant passant dans les fils de résistance provoque une élévation de température du vitrage. On évite ou on élimine ainsi la buée ou encore on provoque le dégivrage. De tels vitrages chauffants peuvent équiper notamment des véhicules de transport aérien, maritime ou terrestre, tels que les trains et les automobiles; ils sont employés généralement comme parebrise ou comme lunette arrière, dans les automobiles notamment.

Les vitrages mentionnés présentent généralement au moins trois cuches transparentes ou translucides, à savoir une couche intercalaire formée d'un matériau thermoplastique et au moins deux couches rigides qui recouvrent chacune une face de la couche intercalaire. Lorsque le vitrage comporte trois couches, la couche intercalaire, généralement en polyvinylbutyral, porte le réseau de fils qui est incrusté ou noyé en elle. Ce réseau est formé à partir d'un ou de plusieurs fils métalliques fins parallèles entre eux, rectilignes ou le plus souvent ondulés régulièrement. Une telle ondulation présente divers avantages: elle évite les phénomènes néfastes de diffraction optique et elle augmente la longueur du fil pour une distance donnée et/ou elle permet une meilleure dissipation de la chaleur.

Les couches rigides recouvrant le polyvinylbutyral peuvent être des feuilles de verre ou d'un matériau plastique tel que le polyméthacrylate de méthyle. En recouvrant le polyvinylbutyral, ces couches le protègent des agents extérieurs comme les agents atmosphériques auxquels il est très sensible.

Ces couches extérieures rigides ont des épaisseurs supérieures à un et souvent deux ou trois millimètres en raison des contraintes de fabrication, de solidité, mais aussi pour pouvoir présenter de bonnes qualités optiques. De ce fait, les vitrages feuilletés chauffants ou d'alarme mentionnés ont un poids élevé. Ce poids constitue un inconvénient important, notamment dans les applications de ces vitrages aux véhicules de transport. En effet, il est bien connu qu'une des préoccupations essentielles des constructeurs de véhicules est l'allègement de ceux-ci, de façon à les rendre plus économiques mais aussi plus sûrs en abaissant leur centre de gravité, par exemple.

Un autre inconvénient de l'épaisseur importante des couches formant les vitrages chauffants feuilletés connus est le temps important mis par la résistance électrique chauffante pour chauffer la surface du vitrage de manière à la dégivrer ou la désembuer, ce que l'on peut encore désigner par inertie de chauffe et qui est du à la masse et aux faibles conductibilités thermiques du verre ou des matières plastiques utilisées.

L'épaisseur importante des couches nécessite encore des températures de fils de résistances élevées pour l'obtention d'un résultat.

Des vitrages chauffants comprenant une couche intercalaire en matière thermoplastique contenant un réseau de fils électriques et des couches externes rigides sont par exemple décrits dans le FR-A-1 533 535. Le GB-A-1 254 485 décrit également ce type de vitrage en utilisant cependant une couche intercalaire composite.

L'invention propose un nouveau vitrage chauffant ou d'alarme plus léger que ceux connus. Elle propose également de fournir un vitrage chauffant à faible inertie de chauffe. Elle propose encore un vitrage formé essentiellement d'un support rigide recouvert d'une feuille de matières plastiques contenant le réseau de fils de résistance, le support rigide étant de préférence monolithique.

Suivant l'invention, le nouveau vitrage comprend une couche intercalaire en matière thermoplastique transparente ou translucide dans laquelle est incrusté un réseau de fils électriques, la couche intercalaire étant au contact, d'une part, d'un support monolithique ou feuilleté comprenant au moins une feuille rigide et, d'autre part, au contact d'une couche externe de matières plastique non rigide, formée essentiellement d'un matériau plastique présentant d'excellentes propriétés d'autocicatrisation, c'est-à-dire d'un matériau à la surface duquel les éraflures accidentelles ou les compression locales disparaissent rapidement en même temps qu'il présente des propriétés d'antilacération, c'est-à-dire qu'un tel matériau résiste au déchirement lors d'un bris accidentel du vitrage et recouvre les arêtes vives du verre évitant ainsi des coupures et blessures aux occupants du véhicule. On utilise par exemple un polyuréthane thermodurcissable comme décrit dans le FR-A-2 251 608. Un tel vitrage présente alors d'excellentes propriétés de sécurité.

Avantageusement la couche de matière plastique externe a une épaisseur inférieure à 1 mm. Ainsi, lorsque le vitrage est utilisé en tant que vitrage chauffant d'un véhicule par exemple, la faible épaisseur de cette couche superficielle orientée vers l'habitacle du véhicule autorise un chauffage quasi instantané de la face interne du vitrage et l'élimination de la buée le cas échéant.

La couche intercalaire dans laquelle est incrusté le réseau de fils métalliques de faible épaisseur est un matériau thermoplastique pour pouvoir noyer les fils et éviter des défauts optiques. Cette couche peut se présenter sous forme d'une feuille d'un polymère ou d'un copolymère thermoplastique, comme par exemple une feuille de polyvinylbutytal, polyuréthane thermoplastique, copolymère polycarbonate-uréthane. Dutre de bonnes propriétés optiques, cette feuille doit présenter de bonnes propriétés d'adhésion avec les éléments du vitrage qui l'entourent.

Avantageusement, la couche intercalaire ne se présente pas sous forme d'une feuille mono-couche mais elle constitue avec la couche non rigide superficielle une feuille unique è plusieurs couches. D'une part, ceci facilite la fabrication du vitrage comme le montrera la suite de la description et, d'autre part, cela permet d'obtenir un vitrage feuilleté de meilleure qualité optique sans formation de bulles d'air par exemple.

Dans une forme préférée, le vitrage est formé essentiellement d'un support monolithique transparent rigide en verre ou en une matière plastique telle que le polycarbonate, des polymères ou copolymères à bases de monomères acryliques et/ou acrylonitriles, le chlorure de polyvinyle etc... recouvert d'une feuille dont la couche externe est formée essentiellement d'un polyuréthane thermodurcissable présentant des propriétés d'autocicatrisation et d'anti-lacération et dont la couche interne adhérant au support et contenant le réseau de fils métalliques fins est formée essentiellement d'un polymère thermoplastique, notamment un polyuréthane thermoplastique.

La feuille de matière plastique précitée, selon l'invention est formée par exemple à partir de la feuille décrite dans le BE-A-856 398, feuille dans laquelle on a incrusté le réseau de fils métalliques dans sa couche thermoplastique. Cette feuille peut comprendre une coche d'un polyuréthane thermodurcissable choisi parmi ceux obtenus à partir d'isocyanates difonctionnels aliphatiques comme le 1,6-hexanediisocyanate, le 2,2,4-triméthyl-1,6-hexanediisocyanate, le 2,4,4-triméthyl-1,6-hexanediisocyanate, le 1,3-bis(isocyanatométhyl) benzène, le bis (4-isocyanato-cyclohexyl)méthane, le bis (3-méthyl-4-isocyanatocyclohexyl)méthane, le 2,2-bis(4-isocyanatocyclohexyl)propane et le 3-isocyanatomé-thyl-3,5,5-triméthylcyclohexylisocyanate, ainsi que les biurets, isocyanurates et prépolymères de ces composés ayant une fonctionnalité de 3 ou davantage et d'autre part de polyols polyfonctionnels, comme les polyols ramifiés tels que les polyesterpolyols et polyétherpolyols obtenus par réaction d'alcools polyfonctionnels, comme le 1,2,3-propanetriol (glycérol), le 2,2-bis(hydroxyméthyl)-1-propanol (triméthylolé-thane), le 2,2-bis(hydroxyméthyl)-1-butanol (tri-méthylolpropane), le 1,2,4-butanetriol, le 1,2,6-hexanetriol, le 2,2-bis(hydroxyméthyl)-1,3-propanediol (pentaérythritol) et le 1,2,3,4,5,6-hexanehexol (sorbitol), avec des diacides aliphatiques comme l'acide malonique, l'acide succinique, l'acide glutarique, l'acide adipique, l'acide subérique et l'acide sébacique ou avec des éthers cycliques, comme l'oxyde d'éthylène, l'oxyde de 1,2-propylène et le tétrahydrofurane. La couche thermoplastique de la feuille peut être un polyuréthane thermoplastique choisi parmi ceux qui sont obtenus avec des monomères conduisant à la formation de macromolécules à chaîne linéaire. Par exemple, comme diols, on peut prendre des polyesters aliphatiques tels que ceux formés à partir d'un ou plusieurs diacides, comme l'acide malonique, l'acide succinique, l'acide glutarique, l'acide adipique, l'acide subérique ou l'acide sébacique et de diols, comme le 1,2-éthanediol (éthylène glycol), le 1,2-propanediol, le 1,3-propanediol, le 1,2-butanediol, le 1,3-butandediol, le 1,4-butanediol, le 2,2-diméthyl-1,3-propanediol, le diéthylèneglycol, le triéthylèneglycol, les polyéthylèneglycols, le dipropylèneglycol, le tripropylèneglycol, les polypropylèneglycols ou le 2,2-bis(4-hydroxycyclohexyl)propane, éventuellement à l'état de mélange. La couche thermoplastique peut encore être à base de polyuréthanes thermoplastiques préparés à partir de polyéthers linéaires s'obtenant, par exemple, à partir d'oxyde d'éthylène, d'oxyde de 1,2-propylène et de tétrahydrofurane. On peut également utiliser des polycarbonates diols.

Des exemples d'isocyanates difonctionnels aliphatiques pouvant réagir avec les diols ci-dessus pour la formation du polyuréthane thermoplastique sont le 1,6-hexanediisocyanate, le 2,2,4-triméthyl-1,6-hexanediisocyanate, le 2,4,4-triméthyl-1,6-hexanediisocyanate, le 1,3-bis(isocyanatométhyl)benzène, le bis(4-isocyanatocyclohexyl)méthane, le bis(3-méthyl-4-isocyanatocyclohexyl)méthane, le 2,2-bis(4-isocyanatocyclohexyl)propane et le 3-isocyanatomé-thyl-3,5,5-triméthylcyclohexylisocyanate.

Lorsque la feuille est utilisée dans la fabrication d'un vitrage feuilleté, dans une forme préférée, la couche de matière plastique contenant le réseau de fils a une épaisseur de 0,02 à 0,6 mm alors que la couche externe présentant les propriétés déjà citées a une épaisseur de 0,2 à 0,6 mm environ. Le fil métallique incrusté doit avoir un diamètre inférieur à l'épaisseur de la couche thermoplastique et on utilise généralement des fils de 15 à

30 µm de diamètre environ. Ces fils sont incrustés dans la couche thermoplastique généralement par action de la chaleur, écartés les uns des autres de 0,5 à 3 mm environ suivant l'utilisation du vitrage. On utilise de préférence des fils en tungstène, ferro-nickel, cuivre.

Le réseau de fils qui couvre une surface du vitrage que nous appellerons surface active plus ou moins importante selon l'utilisation, est réalisé à partir d'un ou de plusieurs faisceaux de fils. Par exemple, le réseau peut être formé d'un fil unique lorsque la surface active est réduite. Lorsque cette surface est plus importante, il être formé de deux ou trois faisceaux, chaque faisceau étant réalisé à partir d'un fil. Il peut encore être formé d'un ensemble de fils disposés en parallèle entre deux bandes collectrices. Les extrémités du fils ou les bandes collectrices, suivant le cas, sont reliés à une source de tension électrique extérieure au vitrage. La tension électrique, le diamètre du fil, sa longueur et l'écartement entre les fils sont facilement déterminés pour obtenir une puissance spécifique (exprimée en watts par décimètre carré) d'environ 2 W/dm2 à 70 W/dm2 selon l'utilisation du vitrage.

Ainsi, par exemple, lorsque le vitrage est utilisé comme lunette arrière chauffante ou parebrise chauffant ou encore comme vitrage latéral chauffant dans les automobiles, la puissance spécifique varie généralement entre 3 et 8 W/dm2. Dans les transports maritimes, ces vitrages chauffants présentent généralement une puissance spécifique de 12 à 18 W/dm2 environ alors que dans l'aviation, cette puissance spécifique peut varier de 18 à 70 W/dm2 environ.

Le procédé de fabrication de la feuille comprenant deux couches et contenant le réseau de fils électriques comprend la succession d'étapes suivantes:

— on fabrique une feuille de matières plastiques comprenant deux couches, une couche étant formée essentiellement d'une matière plastique présentant des propriétés d'autocicatrisation et d'antilacération alors que l'autre couche est formée essentiellement d'une matière thermoplastique ; 
— on dépose le réseau de fils métalliques sur la face de la couche formée essentiellement d'une matière thermoplastique.

La feuille de matières plastiques peut être fabriquée de la manière décrite dans le BE-A-856 398 par exemple, par coulée d'une première couche de matière plastique possédant les propriétés d'autocicatrisation et antilacération, puis par coulée sur cette couche d'une deuxième couche de matière thermoplastique ayant de bonnes propriétés d'adhésion. Pour ce faire on peut utiliser la tête de coulée décrite dans le DE-A-14 596.

Le dépôt du réseau de fils métalliques sur la face de la couche thermoplastique peut être effectué par différentes méthodes bien connues de l'homme de métier. Le fil peut être déposé de façon rectiligne ou en formant des ondulations approximativement sinusoïdales. Dans ce dernier cas on peut utiliser par exemple la méthode décrite dans le FR-A-2 162 040, dans laquelle on confère la forme finale sinusoidale à chaque fil immédiatement avant de l'appliquer sur la couche thermoplastique. On peut aussi utiliser la technique désignée sous l'appellation THERGLAS (marque déposée) consistant à creuser un sillon dans la couche thermoplastique à l'aide d'une aiguille chauffante, puis à y incruster un fil conducteur selon un trajet grossièrement sinusoïdal.

Lorsque le réseau électrique est formé de plusieurs fils métalliques électriquement en parallèle entre deux bandes métalliques collectrices encore appelées amenées de courant, on peut d'abord déposer sur la face thermoplastique deux bandes collectrices, puis les fils métalliques, les souder aux bandes le cas échéant, surtout lorsque ces fils sont revêtus d'un enduit dans le but de diminuer leur éclat métallique, et éventuellement recouvrir les deux bandes collectrices initialement déposées par deux nouvelles bandes pour obtenir ainsi un meilleur contact fil-bandes collectrices. On utilise un tel réseau lorsque la couche thermoplastique est suffisamment épaisse, par exemple supérieure à 0,3 millimètre environ, de façon que non seulement les fils mais aussi les bandes collectrices se noient en elle.

Pour fabriquer le vitrage feuilleté chauffant ou d'alarme, on assemble ensuite la feuille préformée contenant le réseau de fils métalliques avec le support transparent ou translucide monolithique ou feuilleté.

L'assemblage de la feuille coniennant le réseau électrique avec, le support peut se faire par celandrage, c'est-à-dire par passage de ces éléments entre des rouleaux exerçant sur eux une force pouvant varier entre un et plusieurs centaines de newtons par cm linéaire environ. Pour améliorer l'adhésion entre la feuille et le support on peut chauffer au préalable le support et/ou la feuille ou encore les rouleaux.

On peut aussi réaliser l'assemblage du vitrage par la mise en oeuvre du procédé decrit dans le PR-A-2 230 599, consistant à appliquer la feuille sur le support à l'aide d'une membrane gonflable, le support pouvant être chauffé au préalable.

Pour améliorer encore la liaison entre la feuille et le support, le vitrage peut subir un cycle d'autoclave. Par exemple, lorsque la face du support sur laquelle on colle la feuille est en verre, on place le vitrage pendant une heure environ sous une pression de 3 à 15 bars environ et à une température de 100°C à 140°C environ.

La réalisation du vitrage selon l'invention est généralement plus aisée que celle des vitrages chauffants ou d'alarme connus comprenant un intercalaire en polyvinylbutyral et pour lesquels le cycle d'autoclave est indispensable.

La fabrication de la feuille comprenant le réseau de fils électriques ainsi que la fabrication du vitrage qui utilise une telle feuille se déroulent de préférence dans un local très propre dans lequel les poussières et autres particules sont éliminées le plus possible. L'atmosphère du local contient une humidité relative de 60% environ et sa température est de 20 — 25°C environ. De cette façon on évite, au maximum, toute pollution de la feuille qui risque de provoquer des défauts optiques dans le vitrage.

D'autres caractéristiques et avantages de l'invention apparaîtront dans la description suivant de quelques exemples de réalisation, description faite en référence aux figures.

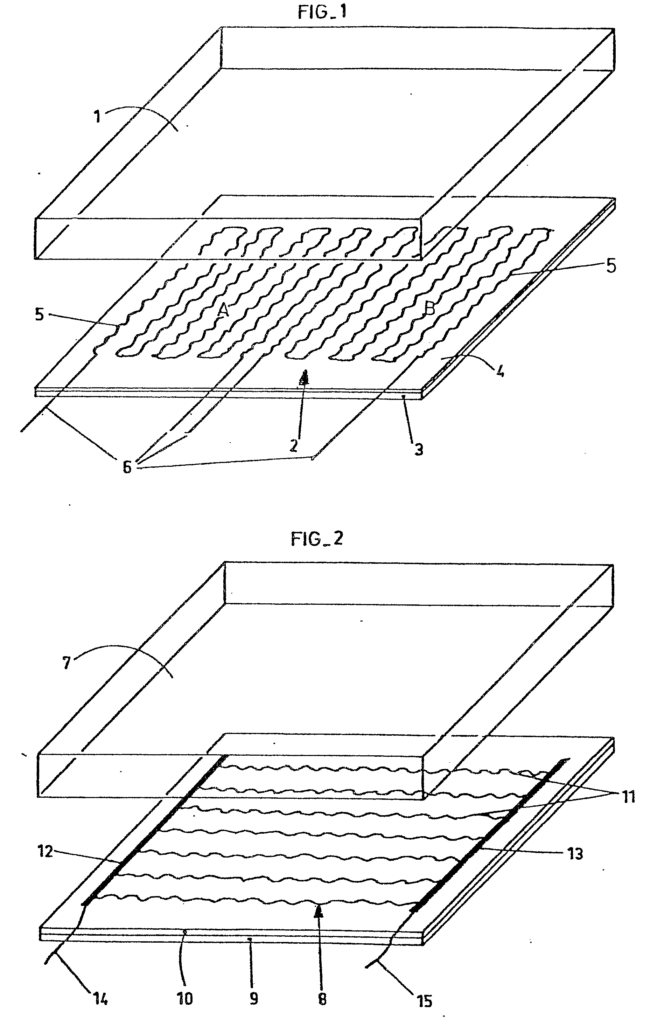

Les figures 1 et 2 représentent des exemples de réalisation de vitrages feuilletés chauffant ou d'alarme selon l'invention.

EXEMPLE 1

On réalise un vitrage chauffant comme représenté sur la figure 1 et qui est formé d'un support monolithique 1 en verre de silicate de 4 millimètres d'épaisseur et d'une feuille de matières plastiques 2 comprenant une première couche 3 en polyuréthane thermodurcissable présentant les propriétés d'autocicatrisation et d'antilacération déjà citées, et une deuxième couche 4 en polyuréthane thermoplastique ayant des propriétés adhésives, dans laquelle est incrusté un réseau de deux faisceaux A et B de fils métalliques 5 disposés parallèlement et avec des ondulations et connectés par leurs extrémités 6 à une source de courant.

La couche de polyuréthane thermodurcissable a une épaisseur de 0,5 millimètre environ alors que la couche de polyuréthane thermoplastique présente une épaisseur de 0,05 millimètre environ.

On forme la feuille par coulée. Pour ce faire, on peut procéder de la façon décrite dans le BE-A-856 398:

On prépare une couche d'un polyuréthane à réseau tridimensionnel ayant des propriétés d'antilacération, par réaction des composants suivants:

— 1000 g d'un polyéther d'un poids moléculaire d'environ 450 obtenu par condensation d'oxyde de propylène-1,2 avec du 2,2-bis (hydroxyméthyl-1-butanol) et ayant une teneur en groupements OH libres d'environ 10,5 à 12%
— 23 g de 2,6-di-tert-butyl-4-méthylphénol,
— 0,5 g de dilaurate de dibutylétain et
— 1000 g d'un biuret de 1,6-hexaméthylènedi-isocyanate ayant

une teneur en groupement NCO libres de 21 à 22%,

— on dégaze le mélange par agitation sous pression réduite en vue d'éviter la formation de bulles dans la couche de polyuréthane.

On coule le mélange homogène de monomères ci-dessus sur un support plan à l'aide d'une tête de coulée à racle par exemple, pour former une couche d'environ 0,5 mm d'épaisseur. Lorsque la couche est polymérisée par action de la chaleur par exemple, on coule sur la couche formée une couche de colle comprenant essentiellement un polyuréthane thermoplastique linéaire. Ce polyuréthane thermoplastique peut être obtenu sous atmosphère d'azote par réaction d'isocyanates sur un polyester par exemple. On prépare le polyester dans un réacteur, par exemple à partir de 145 parties d'acide adipique et 50 parties d'acide sébacique qu'on fait réagir avec 145 parties d'ε-caprolactone, 120 parties de 2,2-diméthyl-1,3-propanediol et 80 parties de 1,4-butanediol en présence de 25 parties de xylène et de 0,25 partie de dilaurate de dibutylétain et à une température de 180°C. Après avoir séparé 22,5 parties d'eau de réaction du mélange, on ajoute comme allongeur de chaîne 18 parties de 1,4-butanediol et 400 parties de xylol. Après que la température ait été abaissée à 80°C, on ajoute sous agitation vigoureuse 150 parties de bis (4-isocyanatocyclohexyl)méthane et 50 parties de 3-isocyanato-méthyl-3,5,5-triméthylcyclohexyl-isocyanate.

Après élévation de la température à 100°C on poursuit la polymérisation jusqu'à obtenir un polyuréthane thermoplastique de masse moléculaire d'au moins 40 000 et de préférence supérieure à 50 000. Après refroidissement jusqu'à environ 70°C, on dilue le mélange avec environ 3000 parties de méthyléthyl-cétone, puis, à une température d'environ 30°C, avec environ 3000 parties de tétrahydrofurane, pour former une solution à environ 10% en poids de polyuréthane. Bien entendu, d'autres polyuréthanes thermoplastiques ou d'autres matières thermoplastiques tels que ceux décrits dans le BE-A-856 398 peuvent être utilisés de la même façon.

A l'aide d'une tête de coulée à racle on cule la solution décrite ci-dessus sur la couche de polyuréthane à réseau tridimensionnel préalablement préparée. Après évaporation des solvants, l'épaisseur de la couche de colle est d'environ 0,05 mm.

La feuille de matières plastiques à deux couches obtenue est alors séparée du support de coulée.

La feuille étant découpée aux dimensions approximatives du support, on dépose sur sa couche thermoplastique, suivant le procédé THERGLAS, deux faisceaux de fil de tungstène de 15 μm de diamètre environ, de résistance 400 Ω/m. L'écartement entre fils est de 1,9 millimètre, le facteur d'ondulation k qui est le rapport de la longueur réelle du fil posé à la distance des points qu'il relie est de 1,4. La surface active rectangulaire couverte par le réseau chauffant a une longueur de 150 millimètres et une largeur de 100 millimètres.

Lorsque le réseau est incrusté dans la couche thermoplastique, on assemble par calandrage la feuille et le support en verre préalablement chauffé à une température de l'ordre de 50°C environ. On place ensuite le vitrage dans un autoclave à une température de l'ordre de 120°C et sous une pression de 10 bars environ.

Le vitrage chauffant réalisé peut alimenté par les extrémitée 6 des fils 5 sous une tension électrique continue ou alternative. Lorsque la tension est par exemple de 86 volts en courant alternatif, la température à la surface externe du vitrage côté polyuréthane mesurée par une thermistance de contact est de 38°C environ. Alimentée sous une tension de 122 volts, la température de surface atteint 52°C.

Le vitrage obtenu présente une excellente qualité optique tant à température ambiante que lorsqu'il est en situation de chauffage. En particulier, il n'apparaît aucun flou lorsqu'il est chaud. De plus, le vitrage obtenu est très résistant à l'usage et on n'observe aucune délamination.

## EXEMPLE 2

On réalise un vitrage chauffant formé d'un support monolithique de 4 millimètres d'épaisseur en polycarbonate, par exemple celui commercialisé sous l'appellation LEXAN (marque déposée) par le Société GENERAL ELECTRIC, et d'une feuille de matières plastiques, identique à celle utilisée dans l'exemple 1, comprenant un rédeaus chauffant semblable. L'assemblage du support et de la feuille se fait par calandrage, en chauffant au préalable le support en polycarbonate à une température de l'ordre de 130°C environ. La pression des rouleaux de la calandreuse est d'environ 3 newtons par centimètre linéaire. Le vitrage obtenu est parfaitement résistant à la délamination sans qu'il soit nécessaire de lui faire subir un cycle d'autoclave.

Le vitrage obtenu présente une bonne qualité optique qui se conserve dans le temps et lors du chauffage. Des vitrages de ce type sont avantageusement utilisés comme vitrages latéraux chauffants de véhicules ou de bâtiments.

## EXEMPLE 3

On réalise un vitrage chauffant, formé d'un support monolithique de 4 millimètres d'épaisseur en polyméthacrylate de méthyle, par exemple celui commercialisé sous l'appellation PETERGLAS (marque déposée) par la Société française PETERLITE, et d'une feuille de matières plastiques, semblable à celle utilisée dans l'exemple 1 et qui comprend un réseau de fils électriques chauffants analogue.

On effectue l'assemblage des éléments par calandrage du support, préalablement chauffé à une température de l'ordre de 50°C, avec la feuille qui disposée de façon que sa couche thermoplastique contenant le réseau chauffant soit au contact du polyméthacrylate de méthyle. La force exercée par les rouleaux du dispositif de calandrage est de l'ordre de 3 newtons par centimètre linéaire. Le produit feuilleté obtenu est ensuite placé dans un autoclave où il subit, pendant une heure environ, une pression de 10 bars environ, è une température de 125°C environ.

Le vitrage obtenu présente une bonne qualité optique qui se conserve dans le temps et lors du chauffage.

## EXEMPLE 4

On réalise un vitrage chauffant comme représenté sur la figure 2 et qui est formé d'un support monolithique 7 en verre de silicate de 4 millimètres d'épaisseur et d'une feuille de matière plastique 8 comprenant une première couche d'un polyuréthane thermodurcissable 9 présentant les propriétés d'autocicatrisation et d'antilacération déjà citées, d'une épaisseur de 0,5 millimètre environ et une deuxième couche d'un polyuréthane thermoplastique 10, ayant des propriétés adhésives, d'épaisseur 0,3 millimètre environ qui colle à la feuille de verre et qui contient un réseau de fils ondulés 11 montés en parallèle entre deux bandes d'alimentation 12 et 13 reliées par les fils de connexion 14 et 15 à une source extérieure de courant électrique.

Pour ce faire, on fabrique la feuille selon la méthode de l'exemple 1. La feuille étant découpée aux dimensions approximatives du support, on incruste d'abord dans sa coche thermoplastique deux bandes collectrices métalliques sur deux bors opposés de la feuille. On dépose ensuite suivant le procédé THERGLAS le réseau de fils ondulés et on recouvre les extrémités des fils et les deux bandes initialement déposées par deux bandes collectrices identiques. Les fils sont soudés aux bandes collectrices.

On assemble alors comme dans l'exemple 1 le support et la feuille contenant le réseau chauffant, par calandrage suivi d'un cycle d'autoclave.

## EXEMPLE 5

On fabrique un vitrage chauffant de la même façon que dans l'exemple 1 en utilisant toutefois comme support un vitrage feuilleté classique formé de deux feuilles de verre extérieures de 1 à 3 mm d'épaisseur environ et d'une feuille de polyvinylbutyral de 0,5 à 1 mm d'épaisseur environ prise en sandwich entre les deux feuilles de verre.

Le vitrage obtenu peut être utilisé comme parebrise chauffant de sécurité.

Outre les avantages dus à ses propriétés de sécurité inhérentes à la couche thermodurcissable, ce vitrage montre une inertie de chauffe plus faible que celle des vitrages feuilletés chauffants connus.

EXEMPLE 6

On fabrique un vitrage chaffant comprenant un support formé d'une feuille de verre recouverte d'une feuille d'un copolymère séquencé organosilicium polycarbonate tel que ceux décrits dans les US-A- 3 189 662, 3 832 419 et 3 821 325, et d'une feuille de matières plastiques identique à celle utilisée dans l'exemple 1 comprenant un réseau chauffant semblable qui recouvre la face libre du copolymère susdit.

Pour réaliser le support on utilise la méthode décrite dans le BE-A-846 704 qui met en oeuvre un produit de réaction hydro-alcoolique d'un amino-alkyl polyalcoxysilane et d'un carbonate d'alkyle. Le copolymère séquencé organosilane polycarbonate étant un absorbeur d'énergie, on utilise avantageusement ce vitrage comme parebrisse chauffant.

**Revendications**

1. Vitrage feuilleté comprenant une couche intercalaire en matière thermoplastique transparente ou translucide renfermant un réseau d'un ou plusieurs fils électriques (5), caractérisé en ce que la couche intercalaire (4) est au contact d'une part d'un support monolithique (1) ou feuilleté comprenant au moins une feuille rigide et d'autre part au contact d'une couche externe de matière plastique (3) non rigide, ayant des propriétés d'antilacération et d'autocicatrisation.

2. Vitrage selon la revendication 1, caractérisé en ce que la couche de matière plastique externe (3) non ridige a une épaisseur inférieure à 1 mm.

3. Vitrage selon une des revendications 1 à 2, caractérisé en ce que la couche de matière plastique non rigide (3) est un polyuréthane thermodurcissable.

4. Vitrage selon une des revendications 1 à 3, caractérisé en ce que la couche de matière plastique non rigide (3) a une épaisseur comprise entre 0,2 et 0,6 mm.

5. Vitrage selon une des revendications 1 à 4, caractérisé en ce que la couche intercalaire (4) portant le réseau de fils électriques (5) est un polyuréthane thermoplastique.

6. Vitrage selon une des revendications 1 à 5, caractérisé en ce que la couche intercalaire (4) a une épaisseur comprise entre 0,02 et 0,6 mm.

7. Vitrage selon une des revendications 1 à 6, caractérisé en ce que le support (1) comprend une feuille de verre au contact de la couche intercalaire (4).

8. Vitrage selon une des revendications 1 à 6, caractérisé en ce que le support (1) comprend une feuille de matière plastique rigide au contact de la couche intercalaire (4).

9. Vitrage selon la revendication 8, caractérisé en ce que la feuille de matière plastique rigide est en polycarbonate.

10. Vitrage selon la revendication 8, caractérisé en ce que la feuille de matière plastique est en polyméthacrylate de méthyle.

11. Vitrage selon la revendication 8, caractérisé en ce que la feuille de matière plastique rigide est un polymère ou copolymère à base de monomères acrylonitriles et/ou acryliques.

12. Feuille préfabriquée de matières plastiques, en particulier pour fabriquer un vitrage selon une des revendications 1 à 11, comprenant une couche d'une matière plastique (3) ayant des propriétés d'autocicatrisation et d'antilacération et une couche de matière plastique (4) thermoplastique ayant des propriétés d'adhésion, couche dans laquelle est incrusté un réseau de fils électriques (5).

Patentansprüche

1. Verbundverglasung mit einer transparenten oder durchscheinenden Zwischenschicht aus einem thermoplastischen Material, die ein Netz aus einem oder mehreren elektrischen Drähten (5) enthält, dadurch gekennzeichnet, daß die Zwischenschicht (4) einerseits mit einem monolithischen oder aus Schichten aufgebauten Träger (1) mit mindestens einer steifen Folie und andererseits mit einer biegsamen äußeren Kunststoffschicht (3), die Bruchfestigkeits- und Selbstheilungseigenschaften aufweist, in Kontakt steht.

2. Verglasung nach Anspruch 1, dadurch gekennzeichnet, daß die biegsame äußere Kunststoffschicht (3) eine Dicke von weniger als 1 mm aufweist.

3. Verglasung nach einem der Ansprüche 1 und 2, dadurch gekennzeichnet, daß die biegsame Kunststoffschicht (3) aus einem wärmehärtbaren Polyurethan besteht.

4. Verglasung nach einem der Ansprüche 1 bis 3, dadurch gekennzeichnet, daß die biegsame Kunststoffschicht (3) eine Dicke zwischen 0,2 und 0,6 mm hat.

5. Verglasung nach einem der Ansprüche 1 bis 4, dadurch gekennzeichnet, daß die das Netz von elektrischen Drähten (5) tragende Zwischenschicht (4) aus einem thermoplastischem Polyurethan besteht.

6. Verglasung nach einem der Ansprüche 1 bis 5, dadurch gekennzeichnet, daß die Zwischenschicht (4) eine Dicke zwischen 0,02 und 0,6 mm aufweist.

7. Verglasung nach einem der Ansprüche 1 bis 6, dadurch gekennzeichnet, daß der Träger (1) eine Glasfolie bzw. -platte aufweist, die mit der Zwischenschicht (4) in Kontakt steht.

8. Verglasung nach einem der Ansprüche 1 bis 6, dadurch gekennzeichnet, daß der Träger (1) eine starre Kunststofffolie aufweist, die mit der Zwischenschicht (4) in Kontakt steht.

9. Verglasung nach Anspruch 8, dadurch gekennzeichnet, daß die starre Kunststoffolie aus Polycarbonat besteht.

10. Verglasung nach Anspruch 8, dadurch gekennzeichnet, daß die Kunststoffolie aus Polymethylmethacrylat besteht.

11. Verglasung nach Anspruch 8, dadurch gekennzeichnet, daß die starre Kunststoffolie aus einem Polymeren oder Copolymeren auf Basis der Acrylnitril- und/oder Acrylsäuremonomeren besteht.

12. Vorgefertigte Kunststoffolie, insbesondere zur Herstellung einer Verglasung nach einem der Ansprüche 1 bis 11, mit einer Kunststoffschicht (3) mit Selbstheilungs- und Bruchfestigkeitseigenschaften und einer thermoplastischen Kunststoffschicht (4) mit Haftungseigenschaften, in die ein Netz aus elektrischen Drähten (5) eingelagert ist.

## Claims

1. Laminated pane comprising an intermediate layer of transparent or translucent thermoplastics material containing a network of one or more electric wires (5), characterised in that the intermediate layer (4) is in contact on the one hand with a monolithic support (1) or laminated support comprising at least one rigid sheet and on the other hand in contact with an exterior layer of non-rigid plastics material (3), having antilaceration and self-healing properties.

2. Pane according to claim 1, characterised in that the non-rigid exterior layer of plastics material (3) has a thickness less than 1 mm.

3. Pane according to one of claims 1 and 2, characterised in that the non-rigid layer of plastics material (3) is a thermohardening polyurethane.

4. Pane according to one of claims 1 to 3, characterised in that the non-rigid layer of plastics material (3) has a thickness between 0.2 and 0.6 mm.

5. Pane according to one of claims 1 to 4, characterised in that the intermediate layer (4) carrying the network of electric wires (5) is a thermoplastic polyurethane.

6. Pane according to one of claims 1 to 5, characterised in that the intermediate layer (4) has a thickness between 0.2 and 0.6 mm.

7. Pane according to one of claims 1 to 6, characterised in that the support (1) comprises a glass sheet in contact with the intermediate layer (4).

8. Pane according to one of claims 1 to 6, characterised in that the support (1) comprises a rigid sheet of plastics material in contact with the intermediate layer (4).

9. Pane according to claim 8, characterised in that the rigid sheet of plastics material is of polycarbonate.

10. Pane according to claim 8, characterised in that the sheet of plastics material is of polymethylmethacrylate.

11. Pane according to claim 8, characterised in that the rigid sheet of plastics material is a polymer or copolymer based on acrylonitrile and/or acrylic monomers.

12. Prefabricated sheet of plastics material, in particular for making a pane according to one of claims 1 to 11, comprising a layer of a plastics material (3) having self-healing and antilaceration properties and a layer of thermoplastic plastics material (4) having adhesion properties, a layer in which is embedded a network of electric wires (5).

0 007 857

FIG_1

FIG_2